# EUROPÄISCHE PATENTSCHRIFT

(11) **EP 3 303 873 B1**
(45) Veröffentlichungstag und Bekanntmachung des Hinweises auf die Patenterteilung: **26.07.2023**
(21) Anmeldenummer: 16731520.9
(22) Anmeldetag: 30.05.2016
(51) Int. Cl.: F16F 13/14

(54) **ELASTOMERES BUCHSENLAGER**
ELASTOMERIC JOURNAL BEARING
PALIER ÉLASTOMÈRE À COUSSINETS

(30) Priorität: 04.06.2015 DE 102015108879
(43) Veröffentlichungstag der Anmeldung: 11.04.2018
(73) Patentinhaber: BOGE Elastmetall GmbH, 49401 Damme (DE)
(72) Erfinder: PALLUCK, Karl-Walter, 49401 Damme (DE); VOSSEL, Andreas, 49086 Osnabrück (DE)
(74) Vertreter: Bossmeyer, Jörg Peter
(86) Internationale Anmeldenummer: PCT/EP2016/062130
(87) Internationale Veröffentlichungsnummer: WO 2016/193201

(56) Entgegenhaltungen:
- DE-A1- 10 351 229
- DE-A1-102014 223 627
- US-A1- 2006 119 025

## Beschreibung

Die Erfindung betrifft ein elastomeres Buchsenlager mit einem sich in einer axialen Richtung erstreckenden Innenteil, einer das Innenteil umringenden Außenhülse und einem zwischen dem Innenteil und der Außenhülse angeordneten und mit dem Innenteil verbundenen elastomeren Lagerkörper, der wenigstens zwei radial verlaufende und in Umfangsrichtung zueinander versetzte Stege und zwei in axialer Richtung zueinander versetzte ringförmige Wände aufweist, zwischen denen sich die Stege axial erstrecken und wenigstens zwei mit Flüssigkeit gefüllte und in Umfangsrichtung durch die Stege voneinander getrennte Kammern vorgesehen sind, die durch wenigstens einen Kanal flüssigkeitsleitend miteinander verbunden sind. Die Erfindung betrifft ferner ein Verfahren zur Herstellung eines elastomeren Buchsenlagers.

Elastomere Buchsenlager der eingangs genannten Art weisen in der Regel einen in den Lagerkörper einvulkanisierten Käfig auf, an dem die Stege enden. Ferner ist außen am Käfig eine Überströmlippe aufvulkanisiert. Zur Montage des Buchsenlagers wird die Außenhülse unter Flüssigkeit über den Lagerkörper geschoben und anschließend zur Erhöhung der Dichtigkeit kalibriert, d.h. im Durchmesser verringert.

Nachteilig hieran ist, dass ein radiales Spannen der Stege nur im Zusammenbauzustand möglich ist. Ferner ist die Kalibrierung auf ein geringfügiges Maß begrenzt. Außerdem führt die Kalibrierung zu einer Erhöhung des Innendrucks und somit zu einer deutlichen Reduzierung der Lebensdauer. Auch führt der erhöhte Innendruck zu einer erhöhten dynamischen Steifigkeit. Außerdem können die axial und radial stoffschlüssig an den Lagerkörper angebundenen Stege bei hohen Belastungen abreißen oder einreißen, was einen vollständigen Funktionsausfall des Buchsenlagers zur Folge haben kann.

Die DE 103 51 229 A1 offenbart die Präambel des Anspruchs 1. DE 103 51 229 A1 offenbart auch ein Verfahren zur Herstellung eines Buchsenlagers.

Ausgehend hiervon liegt der Erfindung die Aufgabe zugrunde, die Gefahr eines Abreißens oder Einreißens der Stege verringern zu können.

Diese Aufgabe wird erfindungsgemäß durch ein elastomeres Buchsenlager nach Anspruch 1 und durch ein Verfahren zur Herstellung eines elastomeren Buchsenlagers nach Anspruch 11 gelöst. Bevorzugte Weiterbildungen der Erfindung sind in den Unteransprüchen und in der nachfolgenden Beschreibung gegeben.

Das erfindungsgemäße elastomere Buchsenlager weist ein sich in einer axialen Richtung erstreckendes Innenteil, eine das Innenteil umringende Außenhülse und einen zwischen dem Innenteil und der Außenhülse angeordneten und mit dem Innenteil verbundenen elastomeren Lagerkörper auf, der zwei oder wenigstens zwei radial verlaufende und in Umfangsrichtung zueinander versetzte Stege und zwei in axialer Richtung zueinander versetzte ringförmige Wände aufweist, zwischen denen sich die Stege axial erstrecken und wenigstens zwei mit Flüssigkeit gefüllte und in Umfangsrichtung durch die Stege voneinander getrennte Kammern vorgesehen sind, die durch wenigstens einen Kanal flüssigkeitsleitend miteinander verbunden sind, wobei die axialen Enden der Stege zumindest im Bereich der radial äußeren Stegenden axiale Stirnseiten aufweisen, die, insbesondere axial, an den Wänden anliegen, wobei zwischen dem Lagerkörper und der Außenhülse ein den Lagerkörper umringendes Trägerelement angeordnet ist, durch welches der elastomere Lagerköper radial vorgespannt ist, und wobei die Stege mit ihren radial äußeren Stegenden an dem Trägerelement anliegen.

Die Stege sind im oder zumindest im Bereich ihrer radial äußeren Stegenden in axialer Richtung lediglich an die Wände angelegt. Im Vergleich zu herkömmlichen Buchsenlagern sind die Stege somit nachgiebiger und/oder flexibler. Insbesondere können sich die Stege bei größeren Bewegungen des Lagerkörpers mitbewegen, sodass die Gefahr eines Abreißens oder Einreißens des Lagerkörpers und/oder der Stege reduziert wird. Hierdurch ist eine nicht unerhebliche Erhöhung der Lebensdauer des Buchsenlagers erzielbar. Ferner ist durch die Nachgiebigkeit der Stege z.B. eine weiche dynamische Verhärtung des Buchsenlagers herbeiführbar. Im vorgefertigten Zustand des Buchsenlagers weisen die Stege im oder zumindest im Bereich ihrer radial äußeren Stegenden und/oder mit ihren axialen Stirnseiten bevorzugt einen axialen Spalt zu den Wänden auf, der bei der Montage des Buchsenlagers, insbesondere durch axiale Druckbeaufschlagung des Lagerkörpers, geschlossen wird.

Unter dem Ausdruck radial und/oder radiale Richtung ist insbesondere eine oder jedwede Richtung zu verstehen, die quer zur axialen Richtung verläuft. Unter dem Ausdruck Umfangsrichtung ist insbesondere eine oder jedwede Richtung zu verstehen, die um die axiale Richtung herum verläuft.

Die axialen Stirnseiten der Stege bilden insbesondere freie Stirnseiten. Bevorzugt sind die Stege an oder mit ihren axialen Enden im oder zumindest im Bereich der radial äußeren Stegenden und/oder an oder mit ihren axialen Stirnseiten nicht stoffschlüssig mit den Wänden verbunden. Insbesondere gehen die Stege an oder mit ihren axialen Enden im oder zumindest im Bereich der radial äußeren Stegenden und/oder an oder mit ihren axialen Stirnseiten nicht stoffschlüssig in die Wände über. Vorzugsweise liegen die Stege mit ihren axialen Enden im oder zumindest im Bereich der radial äußeren Stegenden und/oder mit ihren axialen Stirnseiten beweglich an den Wänden an. Bevorzugt sind die Stege im oder zumindest im Bereich der radial äußeren Stegenden und/oder mit ihren axialen Enden im oder zumindest im Bereich der radial äußeren Stegenden und/oder mit ihren axialen Stirnseiten relativ zu den Wänden bewegbar oder beweglich. Die Beweglichkeit der radial äußeren Stegenden relativ zu den Wänden kann zwar, beispielsweise durch Reibung zwischen den axialen Stirnseiten der Stege und den Wänden, eingeschränkt sein, insbesondere ist aber eine größere Beweglichkeit der radial äußeren Stegenden relativ zu den Wänden im Vergleich zu Buchsenlagern gegeben, bei denen die Stege mit ihren axialen Enden im Bereich der radial äußeren Stegenden stoffschlüssig mit den Wänden verbunden sind. Vorteilhaft sind die Stege im oder zumindest im Bereich der radial äußeren Stegenden lediglich nach radial innen stoffschlüssig mit dem Lagerkörper und/oder mit dem Innenteil verbunden.

Bevorzugt schließen die axialen Stirnseiten der Stege mit den Wänden, insbesondere vor der Montage des Buchsenlagers, axiale Spalte ein, die, insbesondere nach der Montage des Buchsenlagers, durch axiale Druckbeaufschlagung des elastomeren Lagerkörpers geschlossen sind. Somit liegen die axialen Stirnseiten der Stege insbesondere an den Wänden an.

Die Stege sind an ihren radial äußeren Stegenden insbesondere nicht unmittelbar und/oder materialhomogen und/oder stoffschlüssig miteinander verbunden. Bevorzugt weist der elastomere Lagerkörper keinen stoffschlüssig mit den radial äußeren Stegenden verbundenen und das Innenteil vollständig umringenden starren Körper, wie z.B. einen Käfig, auf. Gemäß einer Ausgestaltung weisen die Stege an ihren radial äußeren Stegenden radiale Stirnseiten und/oder jeweils eine radiale Stirnseite auf. Bevorzugt bilden die radialen Stirnseiten der Stege freie Stirnseiten.

Vorzugsweise liegen die Stege mit ihren radial äußeren Stegenden und/oder mit ihren radialen Stirnseiten, insbesondere radial, an der Außenhülse und/oder am Innenumfang der Außenhülse an. Bevorzugt sind die Stege an oder mit ihren radial äußeren Stegenden und/oder an oder mit ihren radialen Stirnseiten nicht stoffschlüssig mit der Außenhülse verbunden. Vorzugsweise liegen die Stege mit ihren radial äußeren Stegenden und/oder mit ihren radialen Stirnseiten beweglich an der Außenhülse an. Bevorzugt sind die Stege im oder zumindest im Bereich der radial äußeren Stegenden und/oder mit ihren radialen Stirnseiten relativ zu der Außenhülse bewegbar oder beweglich. Die Beweglichkeit der radial äußeren Stegenden relativ zu der Außenhülse kann zwar, beispielsweise durch Reibung zwischen den radial äußeren Stegenden und der Außenhülse, eingeschränkt sein, insbesondere ist aber eine größere Beweglichkeit der radial äußeren Stegenden relativ zu der Außenhülse im Vergleich zu Buchsenlagern gegeben, bei denen die Stege mit ihren radial äußeren Stegenden stoffschlüssig mit der Außenhülse verbunden sind.

Erfindungsgemäß ist zwischen dem Lagerkörper und der Außenhülse ein Trägerelement angeordnet, welches den Lagerkörper umringt. Bevorzugt umringt das Trägerelement den Lagerkörper vollständig. Vorzugsweise liegen die Stege mit ihren radial äußeren Stegenden und/oder mit ihren radialen Stirnseiten, insbesondere radial, an dem Trägerelement und/oder am Innenumfang des Trägerelements an. Bevorzugt sind die Stege an oder mit ihren radial äußeren Stegenden und/oder an oder mit ihren radialen Stirnseiten nicht stoffschlüssig mit dem Trägerelement verbunden. Vorzugsweise liegen die Stege mit ihren radial äußeren Stegenden und/oder mit ihren radialen Stirnseiten
beweglich an dem Trägerelement an. Bevorzugt sind die Stege im oder zumindest im Bereich der radial äußeren Stegenden und/oder mit ihren radialen Stirnseiten relativ zu dem Trägerelement bewegbar oder beweglich. Die Beweglichkeit der radial äußeren Stegenden relativ zu dem Trägerelement kann zwar, beispielsweise durch Reibung und/oder Formschluss zwischen den radial äußeren Stegenden und dem Trägerelement, eingeschränkt sein, insbesondere ist aber eine größere Beweglichkeit der radial äußeren Stegenden relativ zu dem Trägerelement im Vergleich zu Buchsenlagern gegeben, bei denen die Stege mit ihren radial äußeren Stegenden stoffschlüssig mit dem Trägerelement verbunden sind.

Die axiale Länge des Trägerelements ist vorzugsweise kürzer als die axiale Länge des elastomeren Lagerkörpers. Insbesondere ist das Trägerelement in axialer Richtung zwischen den Wänden angeordnet. Vorzugsweise liegt das Trägerelement mit seinen axialen Enden, insbesondere axial, an den Wänden an.

Bevorzugt sind die Kammern nach radial außen und/oder in radialer Richtung, insbesondere nach außen, durch das Trägerelement und/oder durch die Außenhülse begrenzt. Vorzugsweise sind die Kammern nach radial innen durch den elastomeren Lagerkörper und/oder durch das Innenteil begrenzt. Ferner sind die Kammern in axialer Richtung bevorzugt durch die Wände begrenzt. Insbesondere liegen die Wände flüssigkeitsdicht an der Außenhülse an. Somit kann ein Austritt von Flüssigkeit aus dem Buchsenlager vermieden werden.

Das Trägerelement kann mehrere Aufgaben erfüllen. Insbesondere ist der Kanal in dem Trägerelement vorgesehen. In diesem Fall bildet das Trägerelement einen Kanalträger. Beispielsweise ist der Kanal in Form einer in den Außenumfang des Trägerelements eingebrachten Nut ausgebildet, die insbesondere durch in dem Trägerelement vorgesehene Mündungslöcher oder -öffnungen mit den Kammern verbunden ist. Bevorzugt ist der Kanal nach radial außen und/oder in radialer Richtung, insbesondere nach außen, durch die Außenhülse begrenzt. Vorzugsweise ist der Kanal nach radial innen und/oder seitlich durch das Trägerelement begrenzt. Ergänzend oder alternativ kann das Trägerelement aber auch dazu verwendet werden, den Lagerkörper während der Montage radial vorzuspannen. Insbesondere ist der elastomere Lagerkörper durch das Trägerelement radial vorgespannt. Das Trägerelement ist z.B. aus mehreren miteinander verbundenen Teilschalen zusammengesetzt. Insbesondere ist das Trägerelement aus zwei Halbschalen zusammengesetzt, welche bevorzugt die Teilschalen bilden. Die Teilschalen oder Halbschalen sind z.B. durch ein oder mehrere Verbindungselemente und/oder durch eine Schnappverbindung miteinander verbunden.

Gemäß einer Ausgestaltung sind die Stege mit ihren radial äußeren Stegenden, insbesondere in Umfangsrichtung, formschlüssig an dem Trägerelement gesichert. Bevorzugt sind am Innenumfang des Trägerelements Vertiefungen vorgesehen, in denen die Stege mit ihren radial äußeren Stegenden, vorzugsweise beweglich und/oder nicht festhaftend, einliegen. Das Trägerelement dient somit insbesondere zur Abstützung der radial äußeren Stegenden, vorzugsweise in Umfangsrichtung. Eine Beweglichkeit der radial äußeren Stegenden relativ zu dem Trägerelement ist somit insbesondere auf ein Verkippen, Verschwenken und/oder Verwinden in den Vertiefungen beschränkt. Die Vertiefungen sind axial und/oder in axialer Richtung vorzugsweise durchgehend. Somit können die radial äußeren Stegenden mit ihren axialen Stirnseiten an den Wänden anliegen. Beispielsweise sind die Vertiefungen im Wesentlichen rechteckig.

Bevorzugt sind die radial äußeren Stegenden relativ zu den Wänden verkippbar und/oder verschwenkbar und/oder verwindbar. Vorzugsweise sind die radial äußeren Stegenden relativ zu der Außenhülse verkippbar und/oder verschwenkbar und/oder verwindbar. Vorteilhaft sind die radial äußeren Stegenden, insbesondere in den Vertiefungen, relativ zu dem Trägerelement verkippbar und/oder verschwenkbar und/oder verwindbar.

Gemäß einer Ausgestaltung weist wenigstens eines der radial äußeren Stegenden und/oder wenigstens eine der radialen Stirnseiten der Stege und/oder wenigstens einer der Stege an seinem radial äußeren Stegende und/oder wenigstens einer der Stege an oder auf seiner radialen Stirnseite wenigstens eine Überströmlippe auf. Bevorzugt liegt dabei die wenigstens eine Überströmlippe und/oder der die wenigstens eine Überströmlippe aufweisende Steg mit der wenigstens einen Überströmlippe, vorzugsweise radial, an der Außenhülse oder an dem Trägerelement, insbesondere am Innenumfang der Außenhülse oder des Trägerelements, an. Vorteilhaft ist die wenigstens eine Überströmlippe in einem Überströmbereich angeordnet, der insbesondere mit beiden Kammern verbunden ist und/oder in jede der Kammern übergeht. Bevorzugt trennt die wenigstens eine Überströmlippe die Kammern, vorzugsweise in dem Überströmbereich, voneinander, insbesondere wenn die oder eine Druckdifferenz zwischen den Kammern unterhalb einer vorbestimmten Druckdifferenz liegt. Bevorzugt ist durch die wenigstens eine Überströmlippe bei Erreichen oder Überschreiten der oder einer vorbestimmten Druckdifferenz zwischen den Kammern, insbesondere in dem Überströmbereich, wenigstens eine zusätzliche flüssigkeitsleitende Verbindung zwischen den Kammern freigebbar. Durch die Freigabe der wenigstens einen zusätzlichen flüssigkeitsleitenden Verbindung kann ein Flüssigkeitsaustausch zwischen den Kammern nicht nur durch den Kanal, sondern zusätzlich durch die wenigstens eine zusätzliche flüssigkeitsleitende Verbindung erfolgen. Somit ist eine Beschädigung des Buchsenlagers vermeidbar, wenn bei zu hoher Druckdifferenz zwischen den Kammern der Kanal aufgrund seines Strömungswiderstandes den Flüssigkeitsaustausch nicht mit dem erforderlichen Volumenstrom zulässt. Die wenigstens eine Überströmlippe bildet vorzugsweise ein oder wenigstens ein Überdruckventil.

Gemäß einer Ausgestaltung erstreckt sich die wenigstens eine Überströmlippe in radialer Richtung durch eine in dem Trägerelement vorgesehene Ausnehmung hindurch. Die Ausnehmung ist insbesondere in einer der Vertiefungen vorgesehen, vorzugsweise in der dem die wenigstens eine Überströmlippe aufweisenden Steg zugeordneten Vertiefung. Bevorzugt ist die Ausnehmung in radialer Richtung durchgehend und/oder die Ausnehmung erstreckt sich in radialer Richtung durch das Trägerelement hindurch. Die Ausnehmung ist bevorzugt mit beiden Kammern verbunden und/oder geht bevorzugt in jede der Kammern über. Bevorzugt sind die Kammern in der Ausnehmung durch die wenigstens eine Überströmlippe voneinander getrennt, insbesondere wenn die Druckdifferenz zwischen den Kammern unterhalb der oder einer vorbestimmten Druckdifferenz liegt. Die Ausnehmung bildet insbesondere den Überströmbereich und/oder der Überströmbereich ist insbesondere in der Ausnehmung vorgesehen.

Die wenigstens eine Überströmlippe kann sich in radialer Richtung erstrecken. Bevorzugt ist die wenigstens eine Überströmlippe aber gegenüber der radialen Richtung geneigt und/oder die wenigstens eine Überströmlippe ist gegenüber der Umfangsrichtung, insbesondere nach außen, geneigt. Durch die Neigung der wenigstens einen Überströmlippe kann eine Strömungsrichtung bevorzugt und/oder eine Einwegfunktion realisiert werden. Insbesondere bildet die wenigstens eine Überströmlippe ein Einweg-Überdruckventil. Vorzugsweise liegt die wenigstens eine Überströmlippe in einer in axialer Richtung und/oder parallel zur axialen Richtung verlaufenden Ebene, die insbesondere gegenüber der radialen Richtung geneigt ist.

Bevorzugt weist der die wenigstens eine Überströmlippe aufweisende Steg, insbesondere an seinem radial äußeren Stegende und/oder an seiner radialen Stirnseite, zwei oder mehrere Überströmlippen auf, die in axialer Richtung bevorzugt nebeneinander angeordnet sind. Vorzugsweise sind die Überströmlippen einander entgegengesetzt geneigt. Alternativ können die Überströmlippen gleich geneigt sein. Ebenfalls ist eine Kombination von einer sich radial erstreckenden und einer geneigten Überströmlippe möglich. Vorzugsweise liegen die Überströmlippen jeweils in einer in axialer Richtung und/oder parallel zur axialen Richtung verlaufenden Ebene, die insbesondere gegenüber der radialen Richtung geneigt ist.

Gemäß einer Weiterbildung weisen die radial äußeren Stegenden und/oder die radialen Stirnseiten der Stege und/oder die Stege an ihren radial äußeren Stegenden und/oder die Stege an oder auf ihren radialen Stirnseiten Überströmlippen auf. Vorzugsweise weisen die radial äußeren Stegenden und/oder die radialen Stirnseiten der Stege und/oder die Stege an ihren radial äußeren Stegenden und/oder die Stege an oder auf ihren radialen Stirnseiten jeweils eine, wenigstens eine, zwei oder mehrere Überströmlippen auf. Bevorzugt liegen die Überströmlippen und/oder die Stege mit den Überströmlippen, vorzugsweise radial, an der Außenhülse oder an dem Trägerelement, insbesondere am Innenumfang der Außenhülse oder des Trägerelements, an. Vorteilhaft sind die Überströmlippen in Überströmbereichen angeordnet, die insbesondere jeweils mit beiden Kammern verbunden sind und/oder jeweils in jede der Kammern übergehen. Bevorzugt trennen die Überströmlippen die Kammern, vorzugsweise in den Überströmbereichen, voneinander, insbesondere wenn die oder eine Druckdifferenz zwischen den Kammern unterhalb der oder einer vorbestimmten Druckdifferenz liegt. Bevorzugt ist durch die Überströmlippen oder durch wenigstens eine der Überströmlippen bei Erreichen oder Überschreiten der oder einer vorbestimmten Druckdifferenz zwischen den Kammern, insbesondere in zumindest einem der Überströmbereiche, wenigstens eine zusätzliche flüssigkeitsleitende Verbindung zwischen den Kammern freigebbar. Durch die Freigabe der wenigstens einen zusätzlichen flüssigkeitsleitenden Verbindung kann ein Flüssigkeitsaustausch zwischen den Kammern nicht nur durch den Kanal, sondern zusätzlich durch die wenigstens eine zusätzliche flüssigkeitsleitende Verbindung erfolgen. Jede Überströmlippe bildet vorzugsweise ein Überdruckventil. Bevorzugt weist jeder Steg, insbesondere an seinem radial äußeren Stegende und/oder an seiner radialen Stirnseite, eine, wenigstens eine, zwei oder mehrere der Überströmlippen auf.

Gemäß einer Ausgestaltung erstrecken sich die Überströmlippen in radialer Richtung durch in dem Trägerelement vorgesehene Ausnehmungen hindurch. Die Ausnehmungen sind insbesondere in den Vertiefungen vorgesehen. Bevorzugt sind die Ausnehmungen in radialer Richtung durchgehend und/oder die Ausnehmungen erstrecken sich in radialer Richtung durch das Trägerelement hindurch. Jede der Ausnehmungen ist bevorzugt mit beiden Kammern verbunden und/oder geht bevorzugt in jede der Kammern über. Bevorzugt sind die Kammern in den Ausnehmungen durch die Überströmlippen voneinander getrennt, insbesondere wenn die Druckdifferenz zwischen den Kammern unterhalb der oder einer vorbestimmten Druckdifferenz liegt. Die Ausnehmungen bilden insbesondere die Überströmbereiche und/oder die Überströmbereiche sind insbesondere in den Ausnehmungen vorgesehen.

Die Überströmlippen können sich in radialer Richtung erstrecken. Bevorzugt sind die Überströmlippen aber gegenüber der radialen Richtung geneigt und/oder die Überströmlippen sind gegenüber der Umfangsrichtung, insbesondere nach außen, geneigt. Ebenfalls ist eine Kombination von sich radial erstreckenden und geneigten Überströmlippen möglich. Vorzugsweise weisen die Stege, insbesondere an ihren radial äußeren Stegenden und/oder an ihren radialen Stirnseiten, jeweils zwei einander entgegengesetzt geneigte der Überströmlippen auf, die in axialer Richtung bevorzugt nebeneinander angeordnet sind. Alternativ können die Stege, insbesondere an ihren radial äußeren Stegenden und/oder an ihren radialen Stirnseiten, aber auch jeweils zwei gleich geneigte der Überströmlippen aufweisen, die in axialer Richtung bevorzugt nebeneinander angeordnet sind. Durch die Neigung der Überströmlippen kann eine Strömungsrichtung bevorzugt und/oder eine Einwegfunktion realisiert werden. Insbesondere bildet jede geneigte Überströmlippe ein Einweg-Überdruckventil.

Vorzugsweise liegen die Überströmlippen jeweils in einer in axialer Richtung und/oder parallel zur axialen Richtung verlaufenden Ebene, die insbesondere gegenüber der radialen Richtung geneigt ist.

Bevorzugt besteht die wenigstens eine Überströmlippe oder bestehen die Überströmlippen aus einem elastomeren Material, wie z.B. Gummi. Insbesondere ist die wenigstens eine Überströmlippe oder sind die Überströmlippen durch das Material des elastomeren Lagerkörpers gebildet.

Bevorzugt weist jede oder die wenigstens eine Überströmlippe, insbesondere zwei, axiale Lippenenden auf, die in axialer Richtung vorzugsweise einander gegenüberliegen. Gemäß einer Ausgestaltung ist jede oder die wenigstens eine Überströmlippe bevorzugt an einem ersten der axialen Lippenenden über ihre gesamte Erstreckung in einer quer zur axialen Richtung verlaufenden Ebene und an einem zweiten der axialen Lippenenden lediglich über einen Teil ihrer Erstreckung in der oder einer quer zur axialen Richtung verlaufenden Ebene an dem jeweiligen Steg oder an dem die wenigstens eine Überströmlippe aufweisenden Steg, insbesondere stoffschlüssig und/oder durch Vulkanisation, angebunden. Bevorzugt ist dabei der radial äußere Endbereich jeder oder der wenigstens einen Überströmlippe am zweiten axialen Lippenende frei und/oder nicht an dem jeweiligen Steg oder an dem die wenigstens eine Überströmlippe aufweisenden Steg angebunden. Zwischen den beiden axialen Lippenenden ist jede oder die wenigstens eine Überströmlippe vorzugsweise frei und/oder nur mit ihrem radial inneren Ende an dem jeweiligen Steg oder an dem die wenigstens eine Überströmlippe aufweisenden Steg, insbesondere stoffschlüssig und/oder durch Vulkanisation, angebunden. Durch diese Ausgestaltung ist es möglich, dass jede oder die wenigstens eine Überströmlippe bei Erreichen oder Überschreiten der vorbestimmten Druckdifferenz schräg zur axialen Richtung und/oder diagonal öffnet. Somit ist eine höhere dynamische Weichheit des Buchsenlagers erzielbar, da die Überströmlippen einen größeren Querschnitt als herkömmliche Überströmlippen freigeben können. Sind zwei, insbesondere einander entgegengesetzt geneigte, der Überströmlippen in axialer Richtung nebeneinander angeordnet, so grenzen die ersten axialen Enden dieser beiden Überströmlippen beispielsweise aneinander an und/oder die ersten axialen Enden dieser beiden Überströmlippen gehen vorzugsweise ineinander über und/oder fallen insbesondere zusammen.

Das Trägerelement weist bevorzugt axiale Anlageflächen auf, an welchen die Überströmlippen oder die wenigstens eine Überströmlippe mit ihren axialen Lippenenden und/oder mit ihren zweiten axialen Lippenenden, insbesondere axial, anliegen. Die axialen Anlageflächen bilden bevorzugt axiale Ränder der in dem Trägerelement vorgesehenen Ausnehmung oder der in dem Trägerelement vorgesehenen Ausnehmungen. Insbesondere ist jede oder die wenigstens eine Überströmlippe an ihren axialen Lippenenden und/oder an ihrem zweiten axialen Lippenende, vorzugsweise stirnseitig, gegenüber einer quer zur axialen Richtung verlaufenden Ebene geneigt. Ferner ist jede axiale Anlagefläche des Trägerelements bevorzugt gegenüber der oder einer quer zur axialen Richtung verlaufenden Ebene geneigt. Jede axiale Anlagefläche und das an dieser anliegende jeweilige, insbesondere zweite, axiale Lippenende, sind dabei vorzugsweise identisch und/oder gleich geneigt. Hierdurch kann auch bei geringen Drücken eine hohe Dichtigkeit erzielt werden. Sind zwei der Überströmlippen in axialer Richtung nebeneinander angeordnet, so sind bevorzugt ihre zweiten axialen Lippenenden, insbesondere stirnseitig, mit zunehmendem radialen Abstand vom Innenteil aufeinander zu geneigt.

Gemäß einer Weiterbildung sind die radial äußeren Stegenden der Stege jeweils plattenförmig ausgebildet. Insbesondere erstreckt sich die Plattenebene jedes radial äußeren Stegendes sowohl in axialer Richtung als auch in Umfangsrichtung. Beispielsweise ist jedes radial äußere Stegende im Wesentlichen rechteckig ausgebildet. Vorzugsweise steht jedes radial äußere Stegende zumindest einseitig oder beidseitig in Umfangsrichtung von dem jeweiligen Steg vor.

Gemäß einer Ausgestaltung weisen die radial äußeren Stegenden jeweils ein, insbesondere separates, Verstärkungsteil auf, das vorzugsweise einen starren Körper bildet. Bevorzugt ist oder bildet jedes der Verstärkungsteile eine Verstärkungsplatte. Insbesondere erstreckt sich die Plattenebene jeder Verstärkungsplatte sowohl in axialer Richtung als auch in Umfangsrichtung. Beispielsweise sind die Verstärkungsteile im Wesentlichen rechteckig. Vorteilhaft sind die Verstärkungsteile in Umfangsrichtung zueinander beabstandet und/oder nicht unmittelbar und/oder materialhomogen miteinander verbunden. Bevorzugt ist jedes Verstärkungsteil in den Lagerkörper und/oder in den jeweiligen Steg und/oder in das jeweilige radial äußere Stegende eingebettet, insbesondere einvulkanisiert. Alternativ ist jedes Verstärkungsteil z.B. auf das jeweilige radial äußere Stegende aufgebracht. In diesem Fall sind die Überströmlippen z.B. auf den Verstärkungsteilen angeordnet, insbesondere auf diese aufvulkanisiert. Bevorzugt ist jedes Verstärkungsteil stoffschlüssig, vorzugsweise durch Vulkanisation, mit dem jeweiligen Steg verbunden. Die Verstärkungsteile bestehen insbesondere aus Kunststoff und/oder aus Metall.

Gemäß einer Weiterbildung weisen die Wände jeweils ein ringförmiges Verstärkungselement auf, das vorzugsweise einen starren Körper bildet. Bevorzugt ist jedes Verstärkungselement in den Lagerkörper und/oder in die jeweilige Wand eingebettet, insbesondere einvulkanisiert. Alternativ ist jedes Verstärkungselement z.B. auf eine axiale Stirnseite der jeweiligen Wand aufgebracht. Bevorzugt ist jedes Verstärkungselement stoffschlüssig, vorzugsweise durch Vulkanisation, mit der jeweiligen Wand verbunden. Die Verstärkungselemente bestehen insbesondere aus Kunststoff und/oder aus Metall. Bevorzugt weisen die Verstärkungselemente einen axialen Abstand zueinander auf, in dem insbesondere die Stege angeordnet sind.

Das Innenteil bildet bevorzugt einen starren Körper. Insbesondere erstreckt sich durch das Innenteil in axialer Richtung ein durchgehendes Montageloch hindurch. Vorzugsweise besteht das Innenteil aus Kunststoff und/oder aus Metall. Das Innenteil umfasst bevorzugt einen inneren Metallkörper und einen diesen umringenden Kunststoffkörper, mit welchem der elastomere Lagerkörper, vorzugsweise stoffschlüssig, verbunden ist. Das Montageloch erstreckt sich in diesem Fall insbesondere durch den inneren Metallkörper hindurch. Ferner ist der Kunststoffkörper vorzugsweise fest, insbesondere stoffschlüssig, mit dem Metallkörper verbunden.

Der Lagerkörper besteht bevorzugt aus einem elastomeren Material, insbesondere aus Gummi. Vorteilhaft sind die Verstärkungsteile und/oder die Verstärkungselemente in den Lagerkörper eingebettet, insbesondere einvulkanisisert. Bevorzugt umringt der Lagerkörper das Innenteil. Vorzugsweise ist der Lagerkörper fest, insbesondere festhaftend und/oder stoffschlüssig, mit dem Innenteil verbunden. Der Lagerkörper steht insbesondere unter axialer und/oder radialer Vorspannung.

Das Trägerelement bildet bevorzugt einen starren Körper. Vorzugsweise besteht das Trägerelement aus Kunststoff und/oder aus Metall.

Die Außenhülse bildet bevorzugt einen starren Körper. Insbesondere ist die Außenhülse zylinderförmig oder im Wesentlichen zylinderförmig. Bevorzugt umringt die Außenhülse den Lagerkörper und/oder das Trägerelement. Vorzugsweise besteht die Außenhülse aus Kunststoff und/oder aus Metall. Insbesondere ist der Lagerkörper durch die Außenhülse axial und/oder radial vorgespannt.

Gemäß einer Weiterbildung weist die Außenhülse zwei axial zueinander beabstandete Axialanlagen auf, die sich, insbesondere vom Innenumfang der Außenhülse aus, radial nach innen erstrecken. Bevorzugt ist der elastomere Lagerkörper in axialer Richtung zwischen den Axialanlagen angeordnet. Vorteilhaft ist der elastomere Lagerkörper durch die Axialanlagen axial in der Außenhülse festgelegt. Vorzugsweise liegt der elastomere Lagerkörper mit seinen Wänden, insbesondere axial, an den Axialanlagen an. Bevorzugt ist der elastomere Lagerkörper durch die Axialanlagen unter axiale Vorspannung gesetzt. Beispielsweise sind die Axialanlagen durch axiale Endbereiche der Außenhülse gebildet, die insbesondere nach radial innen umgelegt und/oder umgebördelt sind.

Die Erfindung betrifft ferner ein Verfahren zur Herstellung des oder eines erfindungsmäßen elastomeren Buchsenlagers, wobei der elastomere Lagerkörper hergestellt und/oder bereitgestellt und mit dem Innenteil verbunden wird, wonach der mit dem Innenteil verbundene elastomere Lagerkörper, insbesondere in axialer Richtung und/oder vorzugsweise unter axialer Druckbeaufschlagung, unter Flüssigkeit in die Außenhülse eingebracht und anschließend in der Außenhülse festgelegt wird. Der elastomere Lagerkörper wird dabei derart
hergestellt, dass die axialen Stirnseiten der Stege mit den Wänden axiale Spalte einschließen. Ferner erfolgt das Einbringen des mit dem Innenteil verbundenen elastomeren Lagerkörpers in die Außenhülse unter derartiger axialer Druckbeaufschlagung des elastomeren Lagerkörpers, dass die axialen Spalte geschlossen und die axialen Stirnseiten der Stege an die Wände angelegt werden, wobei das Trägerelement derart an dem elastomeren Lagerkörper montiert wird, dass dieser von dem Trägerelement umringt und unter radiale Vorspannung gesetzt wird, wonach das Einbringen des mit dem Innenteil verbundenen elastomeren Lagerkörpers in die Außenhülse zusammen mit dem den elastomeren Lagerkörper umringenden Trägerelement erfolgt, sodass dieses zwischen dem elastomeren Lagerkörper und der Außenhülse angeordnet wird. Das Innenteil wird insbesondere hergestellt und/oder bereitgestellt, bevorzugt bevor der Lagerkörper hergestellt wird. Vorzugsweise wird ferner die Außenhülse hergestellt und/oder bereitgestellt.

Das erfindungsgemäße Verfahren kann gemäß allen im Zusammenhang mit dem erfindungsgemäßen Buchsenlager erläuterten Ausgestaltungen weitergebildet sein. Ferner kann das erfindungsgemäße Buchsenlager gemäß allen im Zusammenhang mit dem erfindungsgemäßen Verfahren erläuterten Ausgestaltungen weitergebildet sein.

Gemäß einer Ausgestaltung wird der elastomere Lagerkörper durch Umgießen oder Umspritzen des Innenteils mit einem elastomeren Werkstoff, wie z.B. Gummi, hergestellt. Vorzugsweise wird der elastomere Lagerkörper bereits während seiner Herstellung mit dem Innenteil verbunden. Alternativ wird der elastomere Lagerkörper nach seiner Herstellung mit dem Innenteil verbunden. Die Flüssigkeit oder ein Teil der Flüssigkeit, unter welcher der mit dem Innenteil verbundene elastomere Lagerkörper in die Außenhülse eingebracht wird, bildet nach dem Festlegen des elastomeren Lagerkörpers in der Außenhülse insbesondere die Flüssigkeit, mit denen die Kammern gefüllt sind.

Bevorzugt wird ein oder das Trägerelement hergestellt und/oder bereitgestellt. Insbesondere wird das Trägerelement aus mehreren Teilschalen oder aus zwei Halbschalen zusammengesetzt, die bevorzugt durch eine Schnappverbindung miteinander verbunden werden. Die Teilschalen oder Halbschalen werden vorzugsweise hergestellt und/oder bereitgestellt.

Gemäß einer Weiterbildung wird das Trägerelement, insbesondere vor dem Einbringen des mit dem Innenteil verbundenen elastomeren Lagerkörpers in die Außenhülse, derart an dem elastomeren Lagerkörper montiert, dass dieser von dem Trägerelement umringt und unter radiale Vorspannung gesetzt wird. Damit ist insbesondere der Vorteil verbunden, dass beim radialen Spannen des Lagerkörpers nicht gegen die nahezu inkompressible Flüssigkeit gearbeitet werden muss. Nach der Montage des Trägerelements an dem elastomeren Lagerkörper erfolgt das Einbringen des mit dem Innenteil verbundenen elastomeren Lagerkörpers in die Außenhülse dann zusammen mit dem den elastomeren Lagerkörper umringenden Trägerelement, sodass dieses insbesondere zwischen dem elastomeren Lagerkörper und der Außenhülse angeordnet wird.

Gemäß einer Ausgestaltung weist die Außenhülse vor dem Einbringen des elastomeren Lagerkörpers in die Außenhülse eine erste Axialanlage auf, die sich, insbesondere vom Innenumfang der Außenhülse aus, radial nach innen erstreckt. Die erste Axialanlage ist z.B. durch einen ersten axialen Endbereich der Außenhülse gebildet, der insbesondere nach radial innen umgelegt und/oder umgebördelt ist oder wird. Beim Einbringen des elastomeren Lagerkörpers in die Außenhülse wird der elastomere Lagerkörper, insbesondere in axialer Richtung, zur Anlage mit der ersten Axialanlage gebracht. Das Festlegen des elastomeren Lagerkörper in der Außenhülse erfolgt dann bevorzugt dadurch, dass die Außenhülse im axialen Abstand zur ersten Axialanlage mit einer zweiten Axialanlage versehen wird, die sich, insbesondere vom Innenumfang der Außenhülse aus, radial nach innen erstreckt, sodass der elastomere Lagerkörper, insbesondere unter Beibehaltung seiner axialen Spannung, in axialer Richtung, vorzugsweise formschlüssig, zwischen den beiden Axialanlagen eingespannt wird. Bevorzugt wird die zweite Axialanlage durch einen zweiten axialen Endbereich der Außenhülse gebildet, der insbesondere nach radial innen umgelegt und/oder umgebördelt wird. Die erste und die zweite Axialanlage bilden insbesondere die im Zusammenhang mit dem erfindungsgemäßen Buchsenlager erläuterten Axialanlagen.

Gemäß einer Weiterbildung wird die Außenhülse, insbesondere nach dem Festlegen des elastomeren Lagerkörpers in der Außenhülse, in ihrem Durchmesser reduziert (kalibriert). Hierdurch kann die radiale und/oder axiale Vorspannung des elastomeren Lagerkörpers weiter erhöht werden.

Die Erfindung wird nachfolgend anhand einer bevorzugten Ausführungsform unter Bezugnahme auf die Zeichnung beschrieben. In der Zeichnung zeigen:
Fig. 1 eine perspektivische und teilweise aufgeschnittene Ansicht eines elastomeren Buchsenlagers gemäß einer Ausführungsform,
Fig. 2 eine Draufsicht auf das Buchsenlager,
Fig. 3 einen Längsschnitt durch das Buchsenlager entlang der aus Fig. 2 ersichtlichen Schnittlinie A-A,
Fig. 4 einen Längsschnitt durch das Buchsenlager entlang der aus Fig. 2 ersichtlichen Schnittlinie B-B,
Fig. 5 einen Querschnitt durch das Buchsenlager entlang der aus Fig. 4 ersichtlichen Schnittlinie C-C,
Fig. 6 einen Querschnitt durch das Buchsenlager entlang der aus Fig. 4 ersichtlichen Schnittlinie D-D,
Fig. 7 einen Längsschnitt durch den elastomeren Lagerkörper des Buchsenlagers vor seinem Einbau in die Außenhülse und
Fig. 8 eine Explosionsdarstellung des Buchsenlagers.

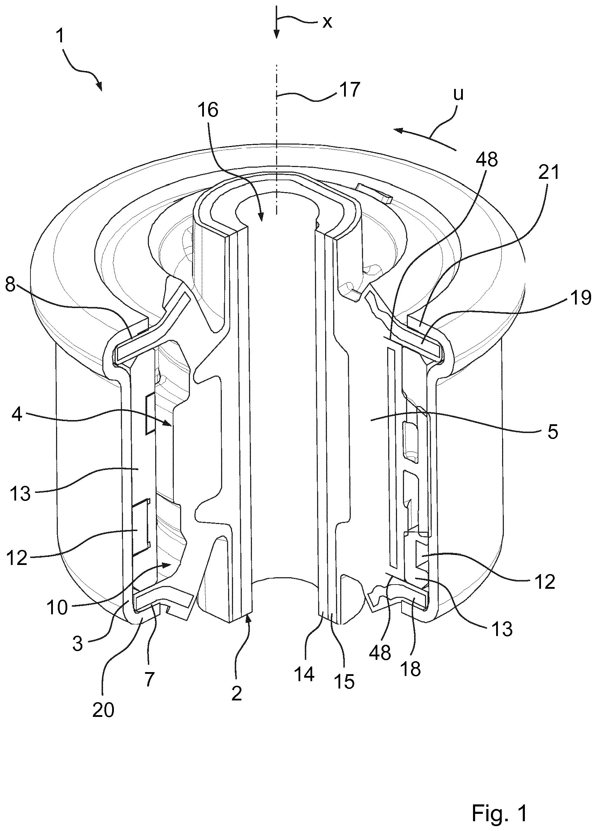

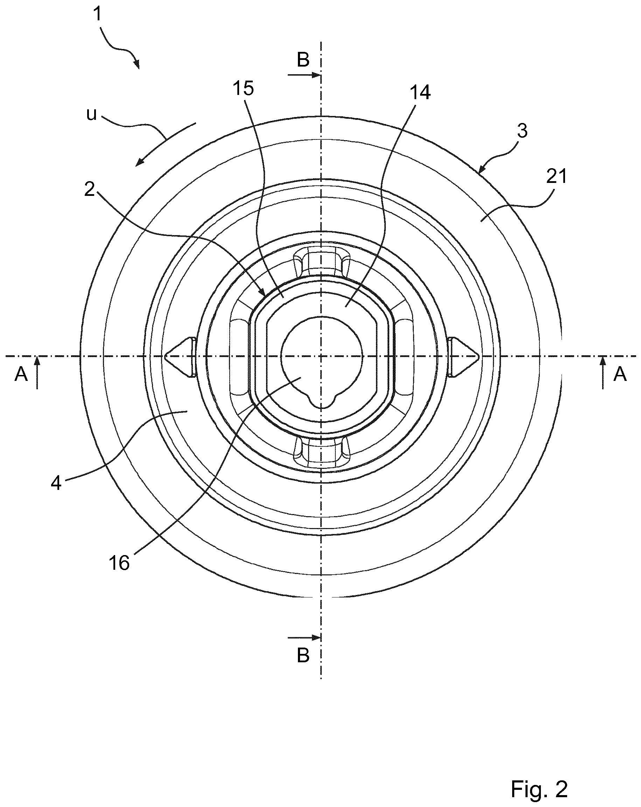

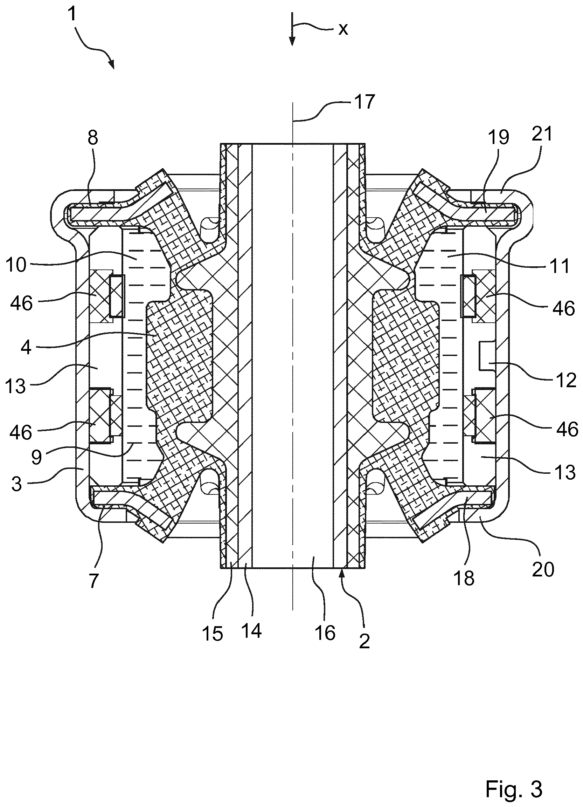

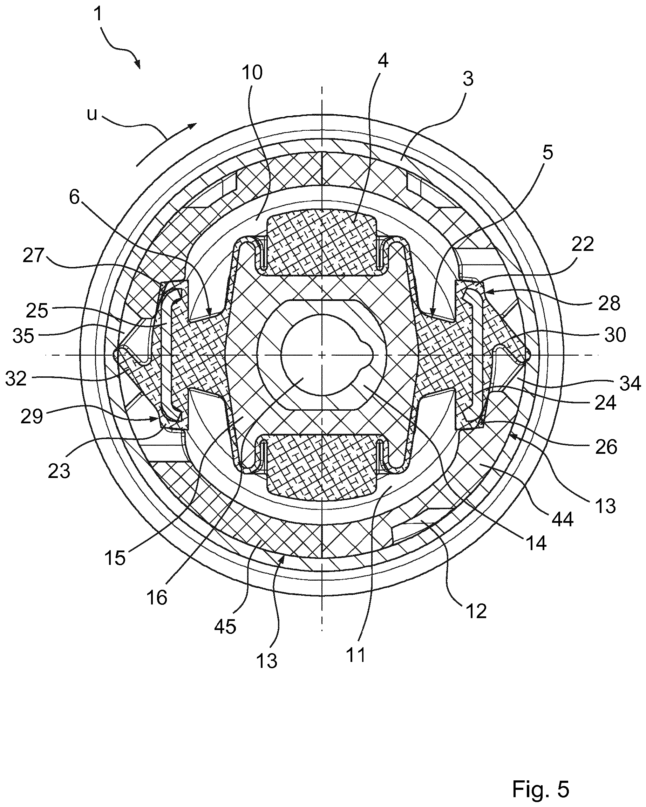

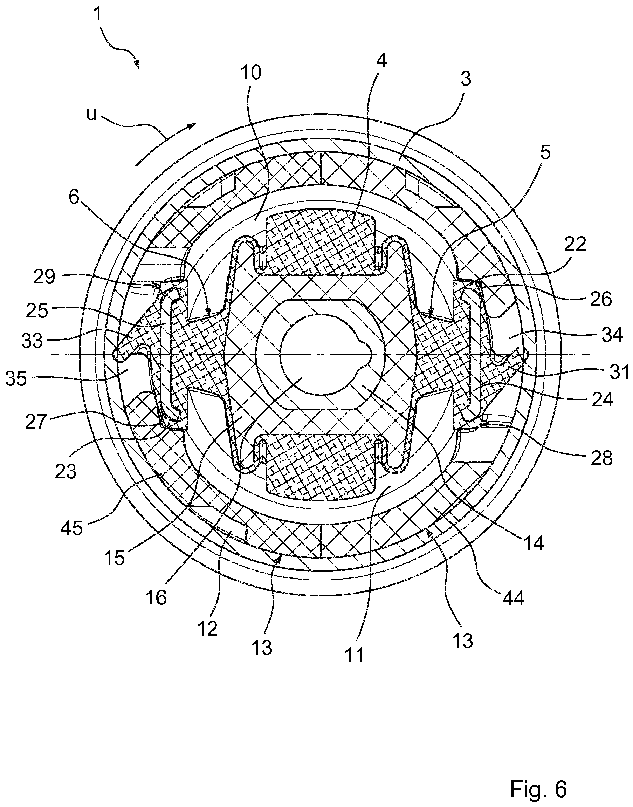

Aus den Fig. 1 bis 6 sind unterschiedliche Ansichten eines elastomeren Buchsenlagers 1 gemäß einer Ausführungsform der Erfindung ersichtlich. Das Buchsenlager 1 weist ein sich in einer axialen Richtung x erstreckendes Innenteil 2, eine das Innenteil 2 umringende Außenhülse 3 und einen zwischen dem Innenteil 2 und der Außenhülse 3 angeordneten und mit dem Innenteil 2 verbundenen elastomeren Lagerkörper 4, der das Innenteil 2 umringt und wenigstens zwei radial verlaufende und in Umfangsrichtung u zueinander versetzte Stege 5 und 6 und zwei in axialer Richtung x zueinander versetzte ringförmige Wände 7 und 8 aufweist, zwischen denen sich die Stege 5 und 6 axial erstrecken und wenigstens zwei mit Flüssigkeit 9 gefüllte und in Umfangsrichtung u durch die Stege 5 und 6 voneinander getrennte Kammern 10 und 11 vorgesehen sind, die durch einen Kanal 12 flüssigkeitsleitend miteinander verbunden sind, und ein zwischen dem elastomeren Lagerkörper 4 und der Außenhülse 5 angeordnetes Trägerelement 13 auf, welches den Lagerkörper 4 umringt. Der Kanal 12 ist in Form einer in den Außenumfang des Trägerelements 13 eingebrachten Nut ausgebildet und in radialer Richtung durch die Außenhülse 3 begrenzt. Die Verbindung des Kanals mit den Kammern 10 und 11 erfolgt durch in dem Trägerelement vorgesehene Mündungslöcher. Das Trägerelement 13 bildet somit einen Kanalträger.

Das Innenteil 2 umfasst einen inneren Metallkörper 14, der von einem Kunststoffkörper 15 umringt ist, mit welchem der elastomere Lagerkörper 4 stoffschlüssig verbunden ist. Ferner erstreckt sich durch den Metallkörper 14 in axialer Richtung x ein Montageloch 16 hindurch, welches insbesondere zur Befestigung des Buchsenlagers 1 an einem anderen Bauteil dient. Eine sich in axialer Richtung x erstreckende Längsmittelachse des Buchsenlagers 1 ist mit dem Bezugszeichen 17 gekennzeichnet.

Die ringförmigen Wände 7 und 8 umfassen jeweils ein ringförmiges Verstärkungselement 18 bzw. 19, wobei das Verstärkungselement 18 in die Wand 7 eingebettet ist und das Verstärkungselement 19 in die Wand 8 eingebettet ist. Das Trägerelement 13 ist in axialer Richtung x zwischen den ringförmigen Wänden 7 und 8 angeordnet und liegt axial an diesen an. Dabei ist der elastomere Lagerkörper 4 durch das Trägerelement 13 unter radiale Vorspannung gesetzt. Ferner ist der elastomere Lagerkörper 4 in axialer Richtung x zwischen sich nach radial innen erstreckenden und/oder umgelegten axialen Endbereichen 20 und 21 der Außenhülse 3 angeordnet und liegt axial an diesen an. Dabei ist der elastomere Lagerkörper 4 durch die axialen Endbereiche 20 und 21 unter axiale Vorspannung gesetzt.

Die radial äußeren Stegenden 22 und 23 der Stege 5 und 6 sind jeweils plattenförmig ausgebildet und stehen in Umfangsrichtung beidseitig von dem jeweiligen Steg hervor. Ferner weisen die radial äußeren Stegenden 22 und 23 jeweils eine Verstärkungsplatte 24 bzw. 25 auf, wobei die Verstärkungsplatte 24 in das radial äußere Stegende 22 des Stegs 5 eingebettet ist und die Verstärkungsplatte 25 in das radial äußere Stegende 23 des Stegs 6 eingebettet ist. Die Verstärkungsplatten 24 und 25 sind in Umfangsrichtung u zueinander beabstandet und nicht unmittelbar miteinander verbunden.

Am Innenumfang des Trägerelements 13 sind in axialer Richtung x durchgehende Vertiefungen 26 und 27 vorgesehen, in denen die Stege 5 und 6 mit ihren radial äußeren Stegenden 22 und 23 einliegen. Dabei liegt der Steg 5 mit seinem radial äußeren Stegende 22 in der Vertiefung 26 ein, und der Steg 6 liegt mit seinem radial äußeren Stegende 23 in der Vertiefung 27 ein.

An ihren radial äußeren Stegenden 22 und 23 weisen die Stege 5 und 6 jeweils eine radiale Stirnseite 28 bzw. 29 auf, wobei die radiale Stirnseite 28 dem Steg 5 und die radiale Stirnseite 29 dem Steg 6 zugeordnet ist. Ferner weisen die Stege 5 und 6 an ihren radialen Stirnseiten 28 und 29 Überströmlippen 30, 31, 32 und 33 auf, die sich in radialer Richtung durch in dem Trägerelement 13 vorgesehene Ausnehmungen 34 und 35 hindurch erstrecken und am Innenumfang der Außenhülse 3 anliegen. Dabei sind die Überströmlippen 30 und 31 dem Steg 5 und die Überströmlippen 32 und 33 dem Steg 6 zugeordnet. Ferner ist die Ausnehmung 34 in der Vertiefung 26 und die Ausnehmung 35 in der Vertiefung 27 vorgesehen.

Die Überströmlippen 30 bis 33 sind gegenüber der Umfangsrichtung u geneigt und erstrecken sich schräg von der jeweiligen radialen Stirnseite 28 bzw. 29 weg nach außen. Dabei weist jeder Steg 5 und 6 zwei einander entgegengesetzt geneigte Überströmlippen 30 und 31 bzw. 32 und 33 auf. Die Überströmlippen 30 und 31 sind in axialer Richtung x nebeneinander angeordnet und weisen jeweils ein erstes axiales Lippenende 49 und ein zweites axiales Lippenende 50 auf, wobei die ersten axialen Lippenenden 49 der beiden Überströmlippen 30 und 31 ineinander übergehen. Ferner sind die Überströmlippen 30 und 31 in radialer Richtung an ihren ersten axialen Lippenenden 49 vollständig und an ihren zweiten axialen Lippenenden 50 lediglich teilweise an dem Steg 5 anvulkanisiert, sodass die zweiten axialen Lippenenden 50 an ihren radial äußeren Enden frei sind. Zusätzlich sind die zweiten axialen Lippenenden 50 stirnseitig geneigt und liegen an axialen Anlageflächen 51 des Trägerelements an, die entsprechend geneigt sind. Die Überströmlippen 32 und 33 sind analog zu den Überströmlippen 30 und 31 ausgebildet.

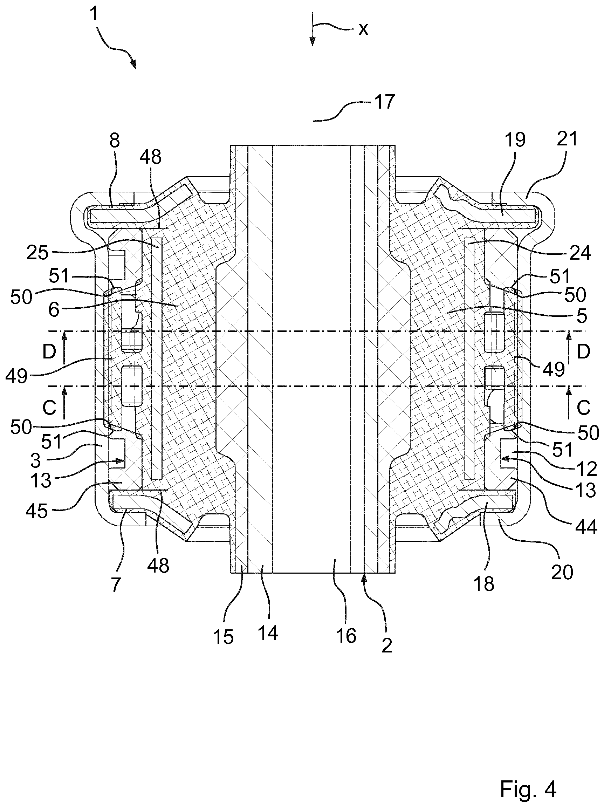

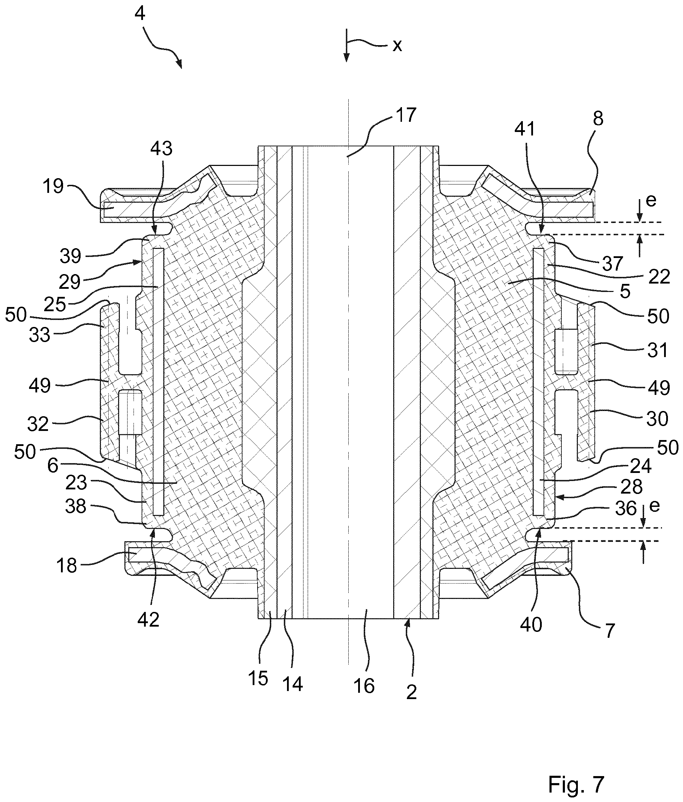

Aus Fig. 7 ist ein Längsschnitt durch den elastomeren Lagerkörper 4 vor seinem Einbau in die Außenhülse 3 ersichtlich. Es ist erkennbar, dass die axialen Enden 36, 37, 38 und 39 der Stege 5 und 6 im Bereich der radial äußeren Stegenden 22 und 23 axiale Stirnseiten 40, 41, 42 und 43 aufweisen, wobei die axialen Stirnseiten 40 und 42 zu der ringförmigen Wand 7 und die axialen Stirnseiten 41 und 43 zu der ringförmigen Wand 8 jeweils einen axialen Abstand aufweisen. Somit schließen die axialen Stirnseiten 40 und 42 mit der ringförmigen Wand 7 und die axialen Stirnseiten 41 und 43 mit der ringförmigen Wand 8 jeweils einen Spalt e ein. Dabei sind die axialen Enden 36 und 37 sowie die axialen Stirnseiten 40 und 41 dem Steg 5 zugeordnet, und die axialen Enden 38 und 39 sowie die axialen Stirnseiten 42 und 43 sind dem Steg 6 zugeordnet. Die Spalte e werden bei der Montage des Buchsenlagers durch axiale Druckbeaufschlagung des elastomeren Lagerkörpers 4 geschlossen, sodass im montierten Zustand des Buchsenlagers 1 die axialen Stirnseiten 40 und 42 axial an der ringförmigen Wand 7 und die axialen Stirnseiten 41 und 43 axial an der ringförmigen Wand 8 anliegen. Die geschlossene Spalte e sind dabei in Fig. 1 und 4 schematisch dargestellt und mit dem Bezugszeichen 48 versehen.

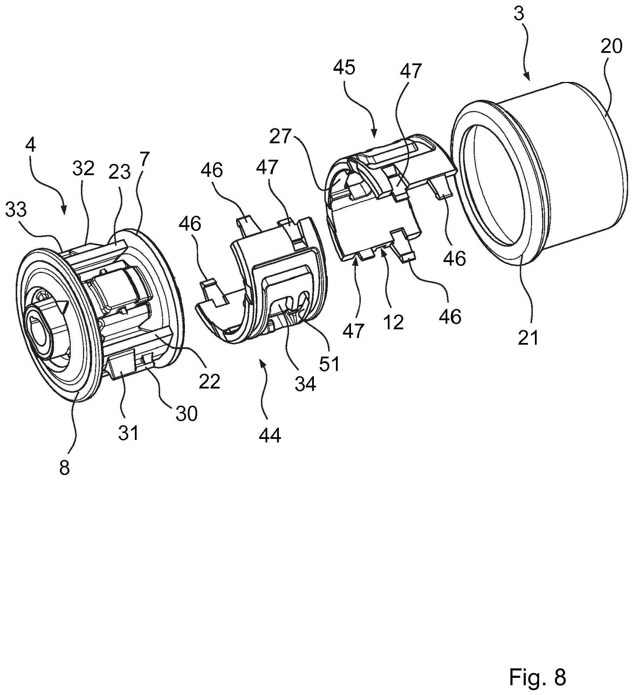

Fig. 8 zeigt eine Explosionsdarstellung des Buchsenlagers 1, wobei ersichtlich ist, dass das Trägerelement 13 aus zwei Halbschalen 44 und 45 besteht, die bei der Montage des Buchsenlagers 1 durch eine Schnappverbindung miteinander verbunden werden und im miteinander verbundenen Zustand das Trägerelement 13 bilden. Jede der Halbschalen weist dazu zwei Schnapphaken 46 und zwei Eingriffskonturen 47 auf, in welche die Schnapphaken der jeweils anderen Halbschale formschlüssig einschnappen können und montierten Zustand des Trägerelements 13 eingeschnappt sind.

### Bezugszeichenliste

1 Buchsenlager
2 Innenteil
3 Außenhülse
4 elastomerer Lagerkörper
5 Steg
6 Steg
7 ringförmige Wand
8 ringförmige Wand
9 Flüssigkeit
10 Kammer
11 Kammer
12 Kanal
13 Trägerelement
14 Metallkörper des Innenteils
15 Kunststoffkörper des Innenteils
16 Montageloch des Innenteils
17 Längsmittelachse
18 ringförmiges Verstärkungselement
19 ringförmiges Verstärkungselement
20 axialer Endbereich der Außenhülse
21 axialer Endbereich der Außenhülse
22 radial äußeres Stegende
23 radial äußeres Stegende
24 Verstärkungsplatte
25 Verstärkungsplatte
26 Vertiefung in Trägerelement
27 Vertiefung in Trägerelement
28 radiale Stirnseite des Stegs
29 radiale Stirnseite des Stegs
30 Überströmlippe
31 Überströmlippe
32 Überströmlippe
33 Überströmlippe
34 Ausnehmung in Trägerelement
35 Ausnehmung in Trägerelement
36 axiales Ende des Stegs
37 axiales Ende des Stegs
38 axiales Ende des Stegs
39 axiales Ende des Stegs
40 axiale Stirnseite des Stegs
41 axiale Stirnseite des Stegs
42 axiale Stirnseite des Stegs
43 axiale Stirnseite des Stegs
44 Halbschale des Trägerelements
45 Halbschale des Trägerelements
46 Schnapphaken
47 Eingriffskontur
48 geschlossener Spalt
49 axiales Lippenende
50 axiales Lippenende
51 axiale Anlagefläche
x axiale Richtung
u Umfangsrichtung
e Spalt / Abstand

## Patentansprüche

1. Elastomeres Buchsenlager mit einem sich in einer axialen Richtung (x) erstreckenden Innenteil (2), einer das Innenteil (2) umringenden Außenhülse (3) und einem zwischen dem Innenteil (2) und der Außenhülse (3) angeordneten und mit dem Innenteil (2) verbundenen elastomeren Lagerkörper (4), der wenigstens zwei radial verlaufende und in Umfangsrichtung (u) zueinander versetzte Stege (5, 6) und zwei in axialer Richtung (x) zueinander versetzte ringförmige Wände (7, 8) aufweist, zwischen denen sich die Stege (5, 6) axial erstrecken und wenigstens zwei mit Flüssigkeit (9) gefüllte und in Umfangsrichtung (u) durch die Stege (5, 6) voneinander getrennte Kammern (10, 11) vorgesehen sind, die durch wenigstens einen Kanal (12) flüssigkeitsleitend miteinander verbunden sind, wobei die axialen Enden (36, 37, 38, 39) der Stege (5, 6) zumindest im Bereich der radial äußeren Stegenden (22, 23) axiale Stirnseiten (40, 41, 42, 43) aufweisen, die an den Wänden (7, 8) anliegen, und wobei zwischen dem Lagerkörper (4) und der Außenhülse (3) ein den Lagerkörper (4) umringendes Trägerelement (13) angeordnet ist, durch welches der elastomere Lagerköper (4) radial vorgespannt ist, **dadurch gekennzeichnet, dass** die Stege (5, 6) mit ihren radial äußeren Stegenden (22, 23) an dem Trägerelement (13) anliegen.

2. Elastomeres Buchsenlager nach Anspruch 1, **dadurch gekennzeichnet, dass** die Stege (5, 6) an ihren axialen Stirnseiten (40, 41, 42, 43) nicht stoffschlüssig mit den Wänden (7, 8) verbunden sind.

3. Elastomeres Buchsenlager nach Anspruch 1 oder 2, **dadurch gekennzeichnet, dass** die Stege (5, 6) mit ihren axialen Stirnseiten (40, 41, 42, 43) relativ zu den Wänden (7,8) beweglich sind.

4. Elastomeres Buchsenlager nach einem der vorangehenden Ansprüche, **dadurch gekennzeichnet, dass** die Stege (5, 6) mit ihren radial äußeren Stegenden (22, 23) nicht stoffschlüssig mit dem Trägerelement (13) verbunden sind.

5. Elastomeres Buchsenlager nach einem der vorangehenden Ansprüche, **dadurch gekennzeichnet, dass** der Kanal (12) in dem Trägerelement (13) vorgesehen ist.

6. Elastomeres Buchsenlager nach einem der vorangehenden Ansprüche, **dadurch gekennzeichnet, dass** das Trägerelement (13) aus zwei durch eine Schnappverbindung miteinander verbundenen Halbschalen (44, 45) zusammengesetzt ist.

7. Elastomeres Buchsenlager nach einem der vorangehenden Ansprüche, **dadurch gekennzeichnet, dass** am Innenumfang des Trägerelements (13) axial durchgehende Vertiefungen (26, 27) vorgesehen sind, in denen die Stege (5, 6) mit ihren radial äußeren Stegenden (22, 23) einliegen.

8. Elastomeres Buchsenlager nach einem der vorangehenden Ansprüche, **dadurch gekennzeichnet, dass** die Stege (5, 6) an ihren radial äußeren Stegenden (22, 23) Überströmlippen (30, 31; 32, 33) aufweisen und mit diesen an der Außenhülse (3) oder an dem Trägerelement (13) anliegen.

9. Elastomeres Buchsenlager nach Anspruch 8, **dadurch gekennzeichnet, dass** die Überströmlippen (30, 31; 32, 33) gegenüber der radialen Richtung geneigt sind und die Stege (5, 6) jeweils zwei einander entgegengesetzt geneigte der Überströmlippen (30, 31; 32, 33) aufweisen.

10. Elastomeres Buchsenlager nach Anspruch 8 oder 9, **dadurch gekennzeichnet, dass** die Überströmlippen (30, 31; 32, 33) sich in radialer Richtung durch in dem Trägerelement (13) vorgesehene Ausnehmungen (34, 35) hindurch erstrecken.

11. Verfahren zur Herstellung eines elastomeren Buchsenlagers nach einem der vorangehenden Ansprüche, wobei der elastomere Lagerkörper (4) hergestellt und mit dem Innenteil (2) verbunden wird, wonach der mit dem Innenteil (2) verbundene elastomere Lagerkörper (4) unter Flüssigkeit (9) in die Außenhülse (3) eingebracht und anschließend in der Außenhülse (3) festgelegt wird, wobei der elastomere Lagerkörper (4) derart hergestellt wird, dass die axialen Stirnseiten (40, 41, 42, 43) der Stege (5, 6) mit den Wänden (7, 8) axiale Spalte (e) einschließen, wobei das Einbringen des mit dem Innenteil (2) verbundenen elastomeren Lagerkörpers (4) in die Außenhülse (3) unter derartiger axialer Druckbeaufschlagung des elastomeren Lagerkörpers (4) erfolgt, dass die axialen Spalte (e) geschlossen und die axialen Stirnseiten (40, 41, 42, 43) der Stege (5, 6) an die Wände (7, 8) angelegt werden, wobei das Trägerelement (13) derart an dem elastomeren Lagerkörper (4) montiert wird, dass dieser von dem Trägerelement (13) umringt und unter radiale Vorspannung gesetzt wird, wonach das Einbringen des mit dem Innenteil (2) verbundenen elastomeren Lagerkörpers (4) in die Außenhülse (3) zusammen mit dem den elastomeren Lagerkörper (4) umringenden Trägerelement (13) erfolgt, sodass dieses zwischen dem elastomeren Lagerkörper (4) und der Außenhülse (3) angeordnet wird.

## Claims

1. Elastomeric bush bearing with an inner part (2) extending in an axial direction (x), an outer sleeve (3) surrounding the inner part (2) and an elastomeric bearing body (4) arranged between the inner part (2) and the outer sleeve (3) and connected to the inner part (2), which has at least two webs (5, 6) running radially and offset to one another in the circumferential direction (u) and two annular walls (7, 8) offset to one another in the axial direction (x), between which the webs (5, 6) extend axially and at least two chambers (10, 11) are provided filled with liquid (9) and separated from one another in the circumferential direction (u) by the webs (5, 6), which are fluidically connected to one another by at least one channel (12), wherein the axial ends (36, 37, 38, 39) of the webs (5, 6) have axial end faces (40, 41, 42, 43) at least in the region of the radially outer web ends (22, 23) which bear against the walls (7, 8), and wherein a carrier element (13), which surrounds the bearing body (4), is arranged between the bearing body (4) and the outer sleeve (3), by way of which carrier element the elastomeric bearing body (4) is radially pre-tensioned, **characterised in that** the webs (5, 6) bear against the carrier element (13) with their radially outer web ends (22, 23).

2. Elastomeric bush bearing according to claim 1, **characterised in that** the webs (5, 6) are not connected to the walls (7, 8) in a materially-bonded manner at their axial end faces (40, 41, 42, 43).

3. Elastomeric bush bearing according to claim 1 or 2, **characterised in that** the webs (5, 6) can be moved with their axial end faces (40, 41, 42, 43) relative to the walls (7, 8).

4. Elastomeric bush bearing according to any one of the preceding claims, **characterised in that** the webs (5, 6) are not connected to the carrier element (13) in a materially-bonded manner with their radially outer web ends (22, 23).

5. Elastomeric bush bearing according to any one of the preceding claims, **characterised in that** the channel (12) is provided in the carrier element (13).

6. Elastomeric bush bearing according to any one of the preceding claims, **characterised in that** the carrier element (13) is composed of two half shells (44, 45) connected to one another by a snap-in connection.

7. Elastomeric bush bearing according to any one of the preceding claims, **characterised in that** axially continuous depressions (26, 27) are provided on the inner circumference of the carrier element (13) in which recesses the webs (5, 6) lie with their radially outer web ends (22, 23).

8. Elastomeric bush bearing according to any one of the preceding claims, **characterised in that** the webs (5, 6) have overflow lips (30, 31; 32, 33) on their radially outer web ends (22, 23) and bear with them against the outer sleeve (3) or against the carrier element (13).

9. Elastomeric bush bearing according to claim 8, **characterised in that** the overflow lips (30, 31; 32, 33) are inclined with respect to the radial direction and the webs (5, 6) each have two of the overflow lips (30, 31; 32, 33) which are inclined opposingly to one another.

10. Elastomeric bush bearing according to claim 8 or 9, **characterised in that** the overflow lips (30, 31; 32, 33) extend in the radial direction through recesses (34, 35) provided in the carrier element (13).

11. Method for manufacturing an elastomeric bush bearing according to any one of the preceding claims, wherein the elastomeric bearing body (4) is manufactured and connected to the inner part (2), after which the elastomeric bearing body (4) connected to the inner part (2) is introduced into the outer sleeve (3) under liquid (9) and then fixed in the outer sleeve (3), wherein the elastomeric bearing body (4) is manufactured in such manner that the axial end faces (40, 41, 42, 43) of the webs (5, 6) form axial gaps (e) with the walls (7, 8), wherein the elastomeric bearing body (4) connected to the inner part (2) is introduced into the outer sleeve (3) under such an axial pressure of the elastomeric bearing body (4) that the axial gaps (e) are closed and the axial end faces (40, 41, 42, 43) of the webs (5, 6) are applied to the walls (7, 8), wherein the carrier element (13) is mounted on the elastomeric bearing body (4) in such manner that it is surrounded by the carrier element (13) and set under radial pre-tension, after which the elastomeric bearing body (4) connected to the inner part (2) is introduced into the outer sleeve (3) together with the carrier element (13) surrounding the elastomeric bearing body (4) such that it is arranged between the elastomeric bearing body (4) and the outer sleeve (3).

## Revendications

1. Palier à coussinet élastomère avec une partie intérieure (2) s'étendant dans une direction axiale (x), une douille extérieure (3) entourant la partie intérieure (2) et un corps de palier (4) élastomère disposé entre la partie intérieure (2) et la douille extérieure (3) et relié à la partie intérieure (2), qui présente au moins deux entretoises (5, 6) s'étendant radialement et décalées l'une par rapport à l'autre dans la direction circonférentielle (u) et deux parois annulaires (7, 8) décalées l'une par rapport à l'autre dans la direction axiale (x), entre lesquelles les entretoises (5, 6) s'étendent axialement et au moins deux chambres (10, 11) remplies de liquide (9) et séparées l'une de l'autre dans la direction circonférentielle (u) par les entretoises (5, 6) sont prévues, qui sont reliées entre elles par au moins un canal (12) de manière à conduire le liquide, dans lequel les extrémités axiales (36, 37, 38, 39) des entretoises (5, 6) présentent, au moins dans la zone des extrémités d'entretoise radialement extérieures (22, 23), des faces frontales axiales (40, 41, 42, 43), qui s'appliquent contre les parois (7, 8), et un élément de support (13) entourant le corps de palier (4) étant disposé entre le corps de palier (4) et la douille extérieure (3), élément de support par lequel le corps de palier élastomère (4) est précontraint radialement, **caractérisé en ce que** les entretoises (5, 6) s'appliquent par leurs extrémités d'entretoise radialement extérieures (22, 23) contre l'élément de support (13).

2. Palier à coussinet élastomère selon la revendication 1, **caractérisé en ce que** les entretoises (5, 6) ne sont pas reliées aux parois (7, 8) par une liaison de matière sur leurs faces frontales axiales (40, 41, 42, 43).

3. Palier à coussinet élastomère selon la revendication 1 ou 2, **caractérisé en ce que** les entretoises (5, 6) sont mobiles par rapport aux parois (7, 8) avec leurs faces frontales axiales (40, 41, 42, 43).

4. Palier à coussinet élastomère selon l'une quelconque des revendications précédentes, **caractérisé en ce que** les entretoises (5, 6) ne sont pas reliées par liaison de matière à l'élément de support (13) avec leurs extrémités d'entretoise radialement extérieures (22, 23).

5. Palier à coussinet élastomère selon l'une quelconque des revendications précédentes, **caractérisé en ce que** le canal (12) est prévu dans l'élément de support (13).

6. Palier à coussinet élastomère selon l'une quelconque des revendications précédentes, **caractérisé en ce que** l'élément de support (13) est composé de deux demi-coques (44, 45) reliées entre elles par une liaison par encliquetage.

7. Palier à coussinet élastomère selon l'une quelconque des revendications précédentes, **caractérisé en ce que** des cavités (26, 27) continues axialement sont prévues sur la périphérie intérieure de l'élément de support (13), dans lesquelles les entretoises (5, 6) sont logées avec leurs extrémités d'entretoise radialement extérieures (22, 23).

8. Palier à coussinet élastomère selon l'une quelconque des revendications précédentes, **caractérisé en ce que** les entretoises (5, 6) présentent des lèvres de débordement (30, 31 ; 32, 33) sur leurs extrémités d'entretoise radialement extérieures (22, 23) et s'appliquent avec celles-ci contre la douille extérieure (3) ou contre l'élément de support (13).

9. Palier à coussinet élastomère selon la revendication 8, **caractérisé en ce que** les lèvres de débordement (30, 31 ; 32, 33) sont inclinées par rapport à la direction radiale et les entretoises (5, 6) présentent chacune deux des lèvres de débordement (30, 31 ; 32, 33) inclinées en sens inverse l'une de l'autre.

10. Palier à coussinet élastomère selon la revendication 8 ou 9, **caractérisé en ce que** les lèvres de débordement (30, 31 ; 32, 33) s'étendent dans la direction radiale à travers des évidements (34, 35) prévus dans l'élément de support (13).

11. Procédé de fabrication d'un palier à coussinet élastomère selon l'une quelconque des revendications précédentes, dans lequel le corps de palier (4) élastomère est fabriqué et relié à la partie intérieure (2), après quoi le corps de palier (4) élastomère relié à la partie intérieure (2) est introduit sous l'effet d'un liquide (9) dans la douille extérieure (3) et est ensuite fixé dans la douille extérieure (3), dans lequel le corps de palier (4) élastomère est fabriqué de telle sorte que les faces frontales axiales (40, 41, 42, 43) des entretoises (5, 6) enferment avec les parois (7, 8) des fentes axiales (e), dans lequel l'introduction du corps de palier (4) élastomère relié à la partie intérieure (2) dans la douille extérieure (3) s'effectue sous une telle sollicitation de pression axiale du corps de palier (4) élastomère que les fentes axiales (e) sont fermées et les faces frontales axiales (40, 41, 42, 43) des entretoises (5, 6) sont appliquées contre les parois (7, 8), dans lequel l'élément de support (13) est monté sur le corps de palier (4) élastomère de telle sorte que celui-ci est entouré par l'élément de support (13) et mis sous précontrainte radiale, après quoi l'introduction du corps de palier (4) élastomère relié à la partie intérieure (2) dans la douille extérieure (3) s'effectue conjointement avec l'élément de support (13) entourant le corps de palier (4) élastomère, de sorte que ce dernier est disposé entre le corps de palier (4) élastomère et la douille extérieure (3).
